# FASCICULE DE BREVET EUROPEEN

(11) **EP 1 332 303 B1**
(45) Date de publication et mention de la délivrance du brevet: **09.03.2005**
(21) Numéro de dépôt: 01992850.6
(22) Date de dépôt: 30.10.2001
(51) Int. Cl.: F16H 59/02

(54) **DISPOSITIF D'ACTIONNEMENT D'UNE BOITE DE VITESSES ET PROCEDE DE COMMANDE IMPULSIONNELLE**
VORRICHTUNG ZUR BEDIENUNG EINES SCHALTGETRIEBES UND VERFAHREN EINES PULSSTEUERUNG
DEVICE FOR ACTUATING A GEARBOX AND PULSE CONTROL METHOD

(30) Priorité: 06.11.2000 FR 0014191
(43) Date de publication de la demande: 06.08.2003
(73) Titulaire: Peugeot Citroen Automobiles SA, 92200 Neuilly sur Seine (FR)
(72) Inventeur: SAUVONNET, Franck, F-94120 Fontenay sous Bois (FR)
(74) Mandataire: Coester, Jacques Charles
(86) Numéro de dépôt international: PCT/FR2001/003371
(87) Numéro de publication internationale: WO 2002/036993

(56) Documents cités:
- EP-A- 0 624 741
- EP-A- 0 911 548
- US-A- 5 992 261
- PATENT ABSTRACTS OF JAPAN vol. 1996, no. 03, 29 mars 1996 (1996-03-29) & JP 07 309147 A (MANNOH CO LTD), 28 novembre 1995 (1995-11-28)

## Description

La présente invention concerne, de façon générale, les systèmes de commande de boîtes de vitesses pour véhicules automobiles.

Plus précisément, l'invention concerne, selon un premier de ses aspects, un dispositif d'actionnement d'une boîte de vitesses pour véhicule automobile, contrôlée au moins par commande impulsionnelle, ce dispositif comprenant un boîtier et un levier monté oscillant dans le boîtier, et ce levier étant sélectivement actionné par l'intermédiaire d'un pommeau susceptible d'être déplacé, suivant une première direction, entre deux positions transitoires extrêmes situées de part et d'autre d'une position de repos. EP 0 624 741 décrit par exemple un tel dispositif.

Bien que les boîtes de vitesses à commande impulsionnelle soient utilisées depuis longtemps sur les motocyclettes, leur utilisation extensive sur les véhicules automobiles est plus récente, en raison à la fois de l'importance de la puissance à transmettre et de l'engouement persistent des automobilistes pour les boîtes de vitesses mécaniques standard.

Quoiqu'il en soit, l'implantation, dans une voiture, d'un dispositif d'actionnement d'une boîte de vitesses à commande impulsionnelle pose des problèmes spécifiques, totalement différents de ceux que peuvent poser une telle implantation sur un véhicule à deux roues.

D'une part, un tel dispositif doit résoudre le compromis d'être à la fois aisément accessible et néanmoins le plus discret possible pour ne pas entraver les mouvements des passagers avant à l'intérieur de l'habitacle.

D'autre part, dans la mesure où le levier de sélection doit être relié avec une grande fiabilité aux organes de sélection internes de la boîte de vitesses, il est extrêmement souhaitable que ce levier ne subisse pas de chocs susceptibles de dégrader cette fiabilité.

L'invention, qui se situe dans ce contexte, a principalement pour but de proposer un dispositif d'actionnement d'une boîte de vitesses susceptible de satisfaire les besoins précédemment décrits.

A cette fin, le dispositif de l'invention, par ailleurs conforme à la définition générique qu'en donne le préambule ci-dessus, est essentiellement caractérisé en ce que le levier est monté coulissant, par rapport au boîtier, suivant une seconde direction sensiblement perpendiculaire à la première, et en ce que ce levier adopte sélectivement, suivant la seconde direction, une position active dans laquelle il fait saillie hors du boîtier, et une position inactive dans laquelle il est escamoté dans le boîtier.

Dans son mode de réalisation préféré, ce dispositif comprend un verrou et un ressort, le verrou étant formé d'une première et d'une seconde parties dont l'une est solidaire du boîtier et dont l'autre est solidaire du levier, et le ressort est précontraint en compression au moins dans la position inactive du levier et présente une première extrémité fixe par rapport au boîtier et une seconde extrémité fixe par rapport au levier.

Par exemple, la première partie du verrou comprend alors au moins une rainure formant came et la seconde partie du verrou comprend un crochet souple dont un doigt s'engage dans la came lorsque les première et seconde parties du verrou passent d'une position relative de déverrouillage à une position relative de verrouillage, et se dégage de la came lorsque les première et seconde parties du verrou passent d'une position relative de verrouillage à une position relative de déverrouillage.

Dans ce cas, il est avantageux de faire en sorte d'une part que la came offre au doigt un premier ou un second trajet de circulation selon que les première et seconde parties du verrou sont rapprochées l'une de l'autre depuis leur position relative de déverrouillage ou depuis leur position relative de verrouillage, d'autre part que le premier trajet aboutisse à un piège retenant le doigt prisonnier, et enfin que le second trajet aboutisse à une ouverture de la came, permettant au doigt de s'en échapper.

Ces caractéristiques peuvent notamment être obtenues en donnant à la came un profil dissymétrique, et en prévoyant que l'ouverture de la came forme une entrée du premier trajet et une sortie du second trajet.

Grâce à l'agencement de l'invention, le pommeau peut lui-même être escamoté dans le boîtier pour la position inactive du levier.

Dans tous les cas, le dispositif de l'invention peut comprendre un guide dans lequel le levier est monté coulissant, ce guide étant lui-même monté oscillant dans le boîtier.

Le dispositif de l'invention peut en outre permettre de piloter une boîte de vitesses suivant un mode impulsionnel ou suivant un mode automatique.

Dans ce cas, ce dispositif peut comprendre des touches de sélection montées dans le boîtier et commandant sélectivement des états respectifs de la boîte de vitesses lorsque le levier est dans sa position inactive, la boîte de vitesses fonctionnant alors en mode automatique.

Selon un second de ses aspects, l'invention concerne un procédé utilisant un dispositif tel que précédemment défini pour actionner une boîte de vitesses pour véhicule automobile, cette boîte de vitesses adoptant un rapport de vitesses instantané sélectionné dans une série ordonnée de rapports de vitesses différents, et ce procédé étant caractérisé en ce qu'il comprend une première opération de commande, exécutée en réponse à un déplacement du levier amenant le pommeau dans une première de ses deux positions transitoires extrêmes, et consistant à déplacer la boîte de vitesses de son rapport de vitesses instantané vers celui de ses rapports de vitesses différents qui suit le rapport de vitesses instantané dans la série ordonnée des rapports de vitesses différents, et une seconde opération de commande, exécutée en réponse à un déplacement du levier amenant le pommeau dans une seconde de ses deux positions transitoires extrêmes, et consistant à déplacer la boîte de vitesses de son rapport de vitesses instantané vers celui de ses rapports de vitesses différents qui précède le rapport de vitesses instantané dans la série ordonnée des rapports de vitesses différents.

En variante, le procédé de l'invention, utilisant un dispositif tel que précédemment défini pour actionner une boîte de vitesses automatique adoptant un état instantané sélectionné dans une série ordonnée d'états différents peut comprendre une première opération de commande, exécutée en réponse à un déplacement du levier amenant le pommeau dans une première de ses deux positions transitoires extrêmes, et consistant à déplacer la boîte de vitesses de son état instantané vers celui de ses états différents qui suit l'état instantané dans la série ordonnée d'états différents, et une seconde opération de commande, exécutée en réponse à un déplacement du levier amenant le pommeau dans une seconde de ses deux positions transitoires extrêmes, et consistant à déplacer la boîte de vitesses de son état instantané vers celui de ses états différents qui précède l'état instantané dans la série ordonnée d'états différents.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective externe d'un dispositif conforme à l'invention, le levier étant représenté en position active;
- la figure 2 est une vue schématique en coupe du dispositif de la figure 1, le levier étant représenté en position inactive;
- la figure 3 est une vue schématique en coupe semblable à la figure 2, le levier étant représenté dans un état transitoire entre sa position inactive et sa position active;
- la figure 4 est une vue schématique en coupe semblable à la figure 3, le levier étant représenté en approche de sa position active;
- la figure 5 est une vue schématique en coupe semblable à la figure 4, le levier étant représenté poussé vers sa position inactive;
- la figure 6 est une vue schématique en perspective et semi-arrachée, illustrant le levier en position inactive, et les première et seconde parties du verrou dans leur position relative de verrouillage;
- la figure 7 est une vue schématique en perspective agrandie de la première partie du verrou;
- la figure 8 est une vue schématique en perspective du levier, représenté en position active, et du verrou dont les première et seconde parties sont représentées dans leur position relative de déverrouillage; et
- la figure 9 est une vue semblable à la figure 8, représentant le levier en perspective sous une incidence différente.

L'invention concerne de façon générale un dispositif permettant d'actionner une boîte de vitesses équipant un véhicule automobile et susceptible d'être contrôlée au moins par commande impulsionnelle, ce dispositif comprenant essentiellement un boîtier 1 et un levier 2.

Le levier 2, qui peut être saisi et manoeuvré par l'intermédiaire d'un pommeau 20 qui lui est solidaire, est monté coulissant dans un guide 5 logé à l'intérieur du boîtier 1.

Le guide 5 comporte par exemple deux tourillons 51 et 52 grâce auxquels il est monté oscillant dans le boîtier 1 autour de l'axe commun de ces tourillons.

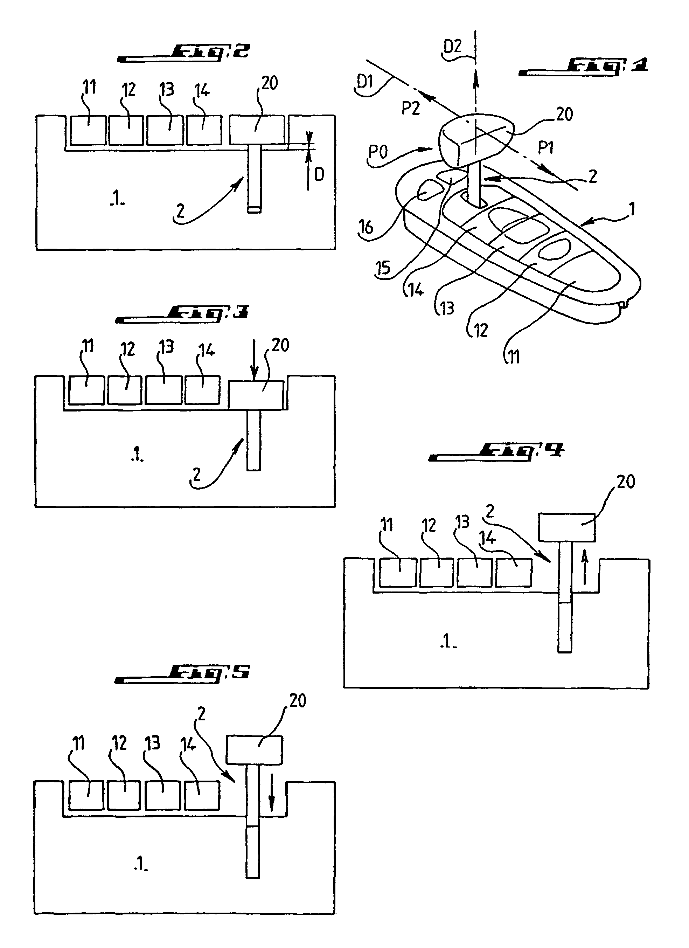

Comme le montre la figure 1, le pommeau 20 du levier 2 peut ainsi être déplacé suivant une direction D1 transversale à l'axe des tourillons 51 et 52, entre deux positions transitoires extrêmes, P1 et P2, situées de part et d'autre d'une position neutre ou de repos P0.

Des capteurs (non représentés) montés dans le boîtier 1, et par exemple simplement constitués de contacteurs électriques, permettent de détecter, en les discriminant l'un de l'autre, un mouvement du levier amenant temporairement le pommeau dans sa position P1 et un mouvement du levier amenant temporairement le pommeau dans sa position P2.

Grâce à un circuit logique de traitement connu en soi et étranger à l'invention, il est ainsi possible de faire en sorte qu'un déplacement du pommeau de la position P0 à la position P1 permette d'engager un rapport de vitesse supérieur, et qu'un déplacement du pommeau de la position P0 à la position P2 permette d'engager un rapport de vitesse inférieur, c'est-à-dire de rétrograder.

Selon l'invention, le levier 2 est monté coulissant par rapport au boîtier 1 suivant une seconde direction D2 sensiblement perpendiculaire à la direction D1, et par exemple verticale.

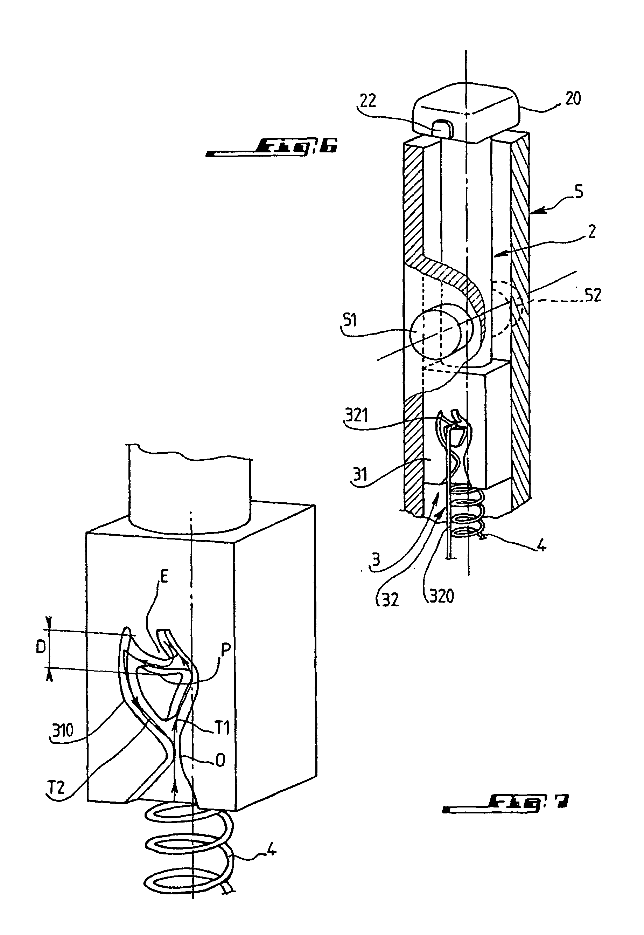

En pratique, le levier 2 est monté coulissant dans le guide 5 et adopte à volonté, suivant la verticale D2, une position active, telle qu'illustrée à la figure 1 et dans laquelle il fait saillie hors du boîtier 1, et une position inactive, telle qu'illustrée à la figure 2 et dans laquelle il est escamoté dans le boîtier 1, le pommeau 20 lui-même pouvant alors être rentré dans le boîtier 1.

Pour ce faire, le dispositif d'actionnement de l'invention comprend essentiellement un verrou 3 et un ressort 4.

Le verrou 3 est formé de deux parties, 31 et 32 (figure 6), dont la première est par exemple solidaire du levier 2 et dont la seconde est solidaire du boîtier 1.

Par ailleurs, le ressort 4 est précontraint en compression et présente une extrémité inférieure 41 fixe par rapport au boîtier 1, et une extrémité supérieure 42 fixe par rapport au levier 2.

La première partie 31 du verrou (figures 6 et 7) comprend une rainure 310 formant came, dont la forme sera précisée ultérieurement.

La seconde partie 32 du verrou comprend un crochet souple 320 se terminant par un doigt recourbé 321.

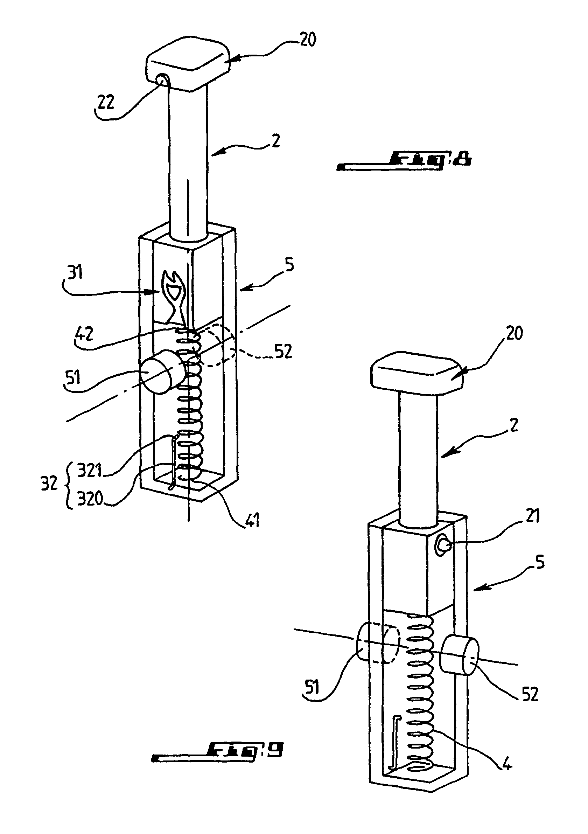

Lorsque les première et seconde parties 31 et 32 du verrou 3 sont rapprochées l'une de l'autre en partant de leur position relative de déverrouillage représentée par les figures 1, 5 et 8, le doigt 321 s'engage dans l'ouverture O (figure 7) de la rainure en came 310, où il suit un trajet T1 qui le conduit jusqu'à un piège P.

Bien que ce mouvement augmente la contrainte en compression du ressort 4, le doigt 321 se trouve, à la fin de ce mouvement, retenu prisonnier dans le piège P, de sorte que les première et seconde parties 31 et 32 restent relativement proches l'une de l'autre, et que le levier reste bloqué en position escamotée dans le boîtier (figures 2 et 6).

Lorsqu'à l'inverse les première et seconde parties 31 et 32 du verrou 3 sont rapprochées l'une de l'autre (figure 3) en partant de leur position relative de verrouillage représentée par la figure 2, le doigt 321 se trouve dévié par l'ergot E et suit, dans la rainure en came 310, un trajet de circulation T2 qui le ramène à l'ouverture O de la came et lui permet de s'échapper de cette rainure 310.

Comme le montre la figure 7, les trajets T1 et T2 doivent être différenciés pour forcer le doigt 321 à emprunter le premier trajet T1 lors du passage des parties 31 et 32 du verrou 3 de leur position relative de déverrouillage à leur position relative de verrouillage, et à emprunter le second trajet T2 lors du mouvement inverse des parties 31 et 32 du verrou 3, de sorte que la rainure en came 310 présente un profil dissymétrique.

Par ailleurs, le levier, dans sa position inactive, doit présenter par rapport au boîtier une garde au moins égale à la distance D séparant le piège P du sommet de la trajectoire T2, de manière à pouvoir retourner dans sa position active.

Des organes de verrouillage supplémentaires, tels qu'un téton 21 (figure 9) commandé par un bouton 22 (figure 6), peuvent être prévus pour bloquer le levier dans sa position active, et éviter ainsi son retour accidentel en position inactive.

Selon sa constitution et son environnement, le dispositif de l'invention permet divers modes de contrôle de boîte de vitesses.

Par exemple, si le levier 2 constitue le seul organe de sélection du dispositif de l'invention, ce dernier peut être utilisé pour commander, de façon impulsionnelle, les rapports de vitesses d'une boîte de vitesses mécanique à commande impulsionnelle.

Dans ce cas, comme indiqué précédemment, le déplacement du pommeau 20 vers l'avant (position P2 sur la figure 1) permet de passer d'un rapport de vitesses à un rapport de vitesses supérieur, par exemple de la première à la seconde, tandis que le déplacement du pommeau 20 vers l'arrière (position P1 sur la figure 1) permet de rétrograder, c'est-à-dire de passer d'un rapport de vitesses à un rapport de vitesses inférieur, par exemple de la cinquième à la quatrième, les effets des déplacements du pommeau vers l'avant et vers l'arrière pouvant le cas échéant être inversés par réglage.

Cependant le levier 2, s'il constitue le seul organe de sélection du dispositif de l'invention, peut aussi être utilisé pour commander, de façon impulsionnelle, les états d'une boîte de vitesses automatique.

On sait en effet qu'un boîte de vitesses automatiques est susceptible de prendre plusieurs états, à savoir un état "Parking" (généralement noté "P"), un état "Recul" (généralement noté "R"), un état "Neutre" ou "Point Mort" (généralement noté "N"), et un état "Marche Avant" (généralement noté "D").

Dans ce cas, le déplacement du pommeau 20 vers l'avant (position P2 sur la figure 1) permet de commander le passage de la boîte de vitesses d'un état à un état supérieur, par exemple de l'état "P" à l'état "R", tandis que le déplacement du pommeau 20 vers l'arrière (position P1 sur la figure 1) permet de commander le passage de la boîte de vitesses d'un état à un état inférieur, par exemple de l'état "D" à l'état "N", les effets des déplacements du pommeau vers l'avant et vers l'arrière pouvant le cas échéant être inversés par réglage.

Cependant, le dispositif de l'invention peut aussi comprendre des touches de sélection telles que 11 à 14 montées dans le boîtier 1 et commandant sélectivement des états respectifs "P", "R", "N", et "D" de la boîte de vitesses lorsque le levier 2 est dans sa position inactive.

Dans ce cas, un capteur (non représenté) par exemple constitué par un contacteur électrique est disposé dans le boîtier pour détecter si le levier est en position active ou en position inactive.

Lorsque le levier 2 est en position active, la boîte de vitesses est placée dans un mode de fonctionnement dans lequel les rapports de vitesses peuvent être commandés de façon impulsionnelle par ce levier 2.

Lorsque le levier 2 est en position inactive, la boîte de vitesses est placée dans son mode de fonctionnement automatique, et ses états "P", "R", "N", et "D" sont commandés par actionnement des touches de sélection respectives 11 à 14.

Enfin, le dispositif de l'invention peut comprendre d'autres touches de sélection montées dans le boîtier 1, telles que les touches 15 et 16, pour commander diverses fonctions annexes, telles que le style de conduite (conduite sportive, conduite sur autoroute, conduite sur neige, etc.).

## Revendications

1. Dispositif d'actionnement d'une boîte de vitesses pour véhicule automobile contrôlée au moins par commande impulsionnelle, ce dispositif comprenant un boîtier (1) et un levier (2) monté oscillant dans le boîtier, et ce levier étant sélectivement actionné par l'intermédiaire d'un pommeau (20) susceptible d'être déplacé, suivant une première direction (D1), entre deux positions transitoires extrêmes (P1, P2) situées de part et d'autre d'une position de repos (P0), **caractérisé en ce que** le levier (2) est monté coulissant, par rapport au boîtier (1), suivant une seconde direction (D2) sensiblement perpendiculaire à la première (D1), et **en ce que** ce levier (2) adopte sélectivement, suivant la seconde direction (D2), une position active dans laquelle il fait saillie hors du boîtier (1), et une position inactive dans laquelle il est escamoté dans le boîtier (1).

2. Dispositif d'actionnement suivant la revendication 1, **caractérisé en ce qu'**il comprend un verrou (3) et un ressort (4), le verrou (3) étant formé d'une première et d'une seconde parties (31, 32) dont l'une est solidaire du boîtier (1) et dont l'autre est solidaire du levier (2), et **en ce que** le ressort (4) est précontraint en compression au moins dans la position inactive du levier (2) et présente une première extrémité (41) fixe par rapport au boîtier (1) et une seconde extrémité (42) fixe par rapport au levier (2).

3. Dispositif d'actionnement suivant la revendication 2, **caractérisé en ce que** la première partie (31) du verrou comprend au moins une rainure (310) formant came et **en ce que** la seconde partie (32) du verrou comprend un crochet souple (320) dont un doigt (321) s'engage dans la came (310) lorsque les première et seconde parties (31, 32) du verrou (3) passent d'une position relative de déverrouillage à une position relative de verrouillage, et se dégage de la came (310) lorsque les première et seconde parties (31, 32) du verrou (3) passent d'une position relative de verrouillage à une position relative de déverrouillage.

4. Dispositif d'actionnement suivant la revendication 3, **caractérisé en ce que** la came (310) offre au doigt (321) un premier ou un second trajet de circulation (T1, T2) selon que les première et seconde parties (31, 32) du verrou sont rapprochées l'une de l'autre depuis leur position relative de déverrouillage ou depuis leur position relative de verrouillage, **en ce que** le premier trajet (T1) aboutit à un piège (P) retenant le doigt (321) prisonnier, et **en ce que** le second trajet (T2) aboutit à une ouverture (O) de la came (310), permettant au doigt (321) de s'en échapper.

5. Dispositif d'actionnement suivant la revendication 4, **caractérisé en ce que** la came (310) présente un profil dissymétrique, et **en ce que** l'ouverture (O) de la came (310) forme une entrée du premier trajet (T1) et une sortie du second trajet (T2).

6. Dispositif d'actionnement suivant l'une quelconque des revendications précédentes, **caractérisé en ce que** le pommeau (20) est escamoté dans le boîtier (1) pour la position inactive du levier (2).

7. Dispositif d'actionnement suivant l'une quelconque des revendications précédentes, **caractérisé en ce qu'**il comprend un guide (5) dans lequel le levier est monté coulissant, et **en ce que** le guide est lui-même monté oscillant dans le boîtier (1).

8. Dispositif d'actionnement suivant l'une quelconque des revendications précédentes, **caractérisé en ce qu'**il comprend en outre des touches de sélection (11 à 16) montées dans le boîtier et commandant sélectivement des états respectifs de la boîte de vitesses lorsque le levier (2) est dans sa position inactive, la boîte de vitesses fonctionnant alors en mode automatique.

9. Procédé utilisant un dispositif suivant l'une quelconque des revendications 1 à 8 pour actionner une boîte de vitesses pour véhicule automobile, cette boîte de vitesses adoptant un rapport de vitesses instantané sélectionné dans une série ordonnée de rapports de vitesses différents, **caractérisé en ce qu'**il comprend une première opération de commande, exécutée en réponse à un déplacement du levier amenant le pommeau dans une première de ses deux positions transitoires extrêmes (P1, P2), et consistant à déplacer la boîte de vitesses de son rapport de vitesses instantané vers celui de ses rapports de vitesses différents qui suit le rapport de vitesses instantané dans la série ordonnée des rapports de vitesses différents, et une seconde opération de commande, exécutée en réponse à un déplacement du levier amenant le pommeau dans une seconde de ses deux positions transitoires extrêmes (P1, P2), et consistant à déplacer la boîte de vitesses de son rapport de vitesses instantané vers celui de ses rapports de vitesses différents qui précède le rapport de vitesses instantané dans la série ordonnée des rapports de vitesses différents.

10. Procédé utilisant un dispositif suivant l'une quelconque des revendications 1 à 7 pour actionner une boîte de vitesses automatique pour véhicule automobile, cette boîte de vitesses adoptant un état instantané sélectionné dans une série ordonnée d'états différents, **caractérisé en ce qu'**il comprend une première opération de commande, exécutée en réponse à un déplacement du levier amenant le pommeau dans une première de ses deux positions transitoires extrêmes (P1, P2), et consistant à déplacer la boîte de vitesses de son état instantané vers celui de ses états différents qui suit l'état instantané dans la série ordonnée d'états différents, et une seconde opération de commande, exécutée en réponse à un déplacement du levier amenant le pommeau dans une seconde de ses deux positions transitoires extrêmes (P1, P2), et consistant à déplacer la boîte de vitesses de son état instantané vers celui de ses états différents qui précède l'état instantané dans la série ordonnée d'états différents.

## Patentansprüche

1. Vorrichtung zum Betätigen eines Schaltgetriebes für Kraftfahrzeuge, das zumindest durch Impulssteuerung angesteuert wird, wobei diese Vorrichtung ein Gehäuse (1) und einen in dem Gehäuse schwenkbar gelagerten Hebel (2) enthält, und wobei dieser Hebel über einen Knauf (20) selektiv betätigt wird, der in einer ersten Richtung (D1) zwischen zwei Übergangsendstellungen (P1, P2) verstellbar ist, die beiderseits einer Ruhestellung (P0) liegen, **dadurch gekennzeichnet, dass** der Hebel (2) bezüglich des Gehäuses (1) in einer zweiten Richtung (D2) gleitbeweglich gelagert ist, die im wesentlichen senkrecht zur ersten (D1) verläuft, und dass dieser Hebel (2) in der zweiten Richtung (D2) selektiv eine aktive Stellung einnimmt, in welcher er aus dem Gehäuse (1) vorsteht, sowie eine zweite inaktive Stellung, in welcher er in das Gehäuse (1) eingefahren ist.

2. Betätigungsvorrichtung nach Anspruch 1, **dadurch gekennzeichnet, dass** sie einen Riegel (3) und eine Feder (4) enthält, wobei der Riegel (3) aus einem ersten und einem zweiten Abschnitt (31, 32) gebildet ist, von denen der eine fest mit dem Gehäuse (1) verbunden ist und der andere fest mit dem Hebel (2) verbunden ist, und dass die Feder (4) zumindest in die inaktive Stellung des Hebels (2) druckbeaufschlagt ist und ein erstes Ende (41) aufweist, das gegenüber dem Gehäuse (1) fest ist, sowie ein zweites Ende (42), das gegenüber dem Hebel (2) fest ist.

3. Vorrichtung nach Anspruch 2, **dadurch gekennzeichnet, dass** der erste Abschnitt (31) des Riegels zumindest eine kurvenartige Nut (310) enthält und der zweite Abschnitt (32) des Riegels einen nachgiebigen Haken (320) enthält, von dem ein Schenkel (321) in die Kurve (310) eingreift, wenn der erste und der zweite Abschnitt (31, 32) des Riegels (3) von einer relativen Entriegelungsstellung in eine relative Verriegelungsstellung übergehen, und aus der Kurve (310) freigegeben wird, wenn der erste und der zweite Abschnitt (31, 32) des Riegels (3) von einer relativen Verriegelungsstellung in eine relative Entriegelungsstellung übergehen.

4. Betätigungsvorrichtung nach Anspruch 3, **dadurch gekennzeichnet, dass** die Kurve (310) dem Schenkel (321) eine erste bzw. eine zweite Umlaufbahn (T1, T2) bietet, je nachdem, ob der erste und der zweite Abschnitt (31, 32) des Riegels aus ihrer relativen Entriegelungsstellung oder aus ihrer relativen Verriegelungsstellung einander angenährt werden, und dass die erste Bahn (T1) in eine Falle (P) führt, in welcher der Schenkel (321) eingeschlossen festgehalten wird, und dass die zweite Bahn (T2) in eine Öffnung (O) der Kurve (310) führt, durch die der Schenkel (321) daraus entweichen kann.

5. Betätigungsvorrichtung nach Anspruch 4, **dadurch gekennzeichnet, dass** die Kurve (310) ein asymmetrisches Profil aufweist und dass die Öffnung (O) der Kurve (310) einen Eingang der ersten Bahn (T1) und einen Ausgang der zweiten Bahn (T2) bildet.

6. Betätigungsvorrichtung nach einem der vorangehenden Ansprüche, **dadurch gekennzeichnet, dass** in der inaktiven Stellung des Hebels (2) der Knauf (20) in das Gehäuse (1) eingefahren ist.

7. Betätigungsvorrichtung nach einem der vorangehenden Ansprüche, **dadurch gekennzeichnet, dass** sie eine Führung (5) enthält, in weicher der Hebel gleitbeweglich gelagert ist, und dass die Führung selbst schwenkbar im Gehäuse (1) gelagert ist.

8. Betätigungsvorrichtung nach einem der vorangehenden Ansprüche, **dadurch gekennzeichnet, dass** sie ferner Auswähltasten (11 bis 16) enthält, die in dem Gehäuse montiert sind und selektiv jeweilige Zustände des Schaltgetriebes steuern, wenn der Hebel (2) sich in seiner inaktiven Stellung befindet, wobei das Getriebe dann im Automatikmodus funktioniert.

9. Verfahren unter Verwendung einer Vorrichtung nach einem der Ansprüche 1 bis 8 zum Betätigen eines Schaltgetriebes für Kraftfahrzeuge, wobei dieses Getriebe einen momentanen Gang einnimmt, der aus einer geordneten Folge von unterschiedlichen Gängen ausgewählt ist, **dadurch gekennzeichnet, dass** es einen ersten Schaltvorgang umfasst, der in Antwort auf eine Verstellung des Hebels erfolgt, bei welcher der Knauf in eine erste von seinen beiden Übergangsendstellungen (P1, P2) gebracht wird und darin besteht, das Getriebe aus seinem momentanen Gang in denjenigen seiner unterschiedlichen Gänge zu verstellen, der dem momentanen Gang in der geordneten Folge von unterschiedlichen Gängen folgt, sowie einen zweiten Schaltvorgang, der in Antwort auf eine Verstellung des Hebels erfolgt, bei welcher der Knauf in eine zweite von seinen beiden Übergangsendstellungen (P1, P2) gebracht wird und darin besteht, das Getriebe aus seinem momentanen Gang in denjenigen seiner unterschiedlichen Gänge zu verstellen, der dem momentanen Gang in der geordneten Folge von unterschiedlichen Gängen vorausgeht.

10. Verfahren unter Verwendung einer Vorrichtung nach einem der Ansprüche 1 bis 7 zum Betätigen eines Automatikgetriebes für Kraftfahrzeuge, wobei dieses Getriebe einen momentanen Zustand einnimmt, der aus einer geordneten Folge von unterschiedlichen Zuständen ausgewählt ist, **dadurch gekennzeichnet, dass** es einen ersten Schaltvorgang umfasst, der in Antwort auf eine Verstellung des Hebels erfolgt, bei welcher der Knauf in eine erste von seinen beiden Übergangsendstellungen (P1, P2) gebracht wird und darin besteht, das Getriebe aus seinem momentanen Zustand in denjenigen seiner unterschiedlichen Zustände zu verstellen, der dem momentanen Zustand in der geordneten Folge von unterschiedlichen Zustände folgt, sowie einen zweiten Schaltvorgang, der in Antwort auf eine Verstellung des Hebels erfolgt, bei welcher der Knauf in eine zweite von seinen beiden Übergangsendstellungen (P1, P2) gebracht wird und darin besteht, das Getriebe aus seinem momentanen Zustand in denjenigen seiner unterschiedlichen Zustände zu verstellen, der dem momentanen Zustand in der geordneten Folge von unterschiedlichen Zuständen vorausgeht.

## Claims

1. Device for actuating a motor vehicle gearbox controlled at least by push-action control, this device comprising a housing (1) and a lever (2) mounted so that it can move back and forth in the housing, and this lever being selectively actuated by means of a knob (20) which can be shifted, in a first direction (D1), between two transitory end positions (P1, P2) situated on either side of a rest position (PO), **characterized in that** the lever (2) is mounted so that it can slide, with respect to the housing (1), in a second direction (D2) substantially perpendicular to the first direction (D1), and **in that** this lever (2) selectively adopts, in the second direction (D2), an active position in which it projects from the housing (1) and an inactive position in which it is retracted into the housing (1).

2. Actuating device according to Claim 1, **characterized in that** it comprises a lock (3) and a spring (4), the lock (3) being formed by first and second parts (31, 32), one of which is attached to the housing (1) and the other of which is attached to the lever (2), and **in that** the spring (4) is compressively preloaded at least in the inactive position of the lever (2) and has a first end (41) which is fixed with respect to the housing (1) and a second end (42) which is fixed with respect to the lever (2).

3. Actuating device according to Claim 2, **characterized in that** the first part (31) of the lock comprises at least one cam-forming groove (310) and **in that** the second part (32) of the lock comprises a flexible hook (320) of which a finger (321) engages in the cam (310) when the first and second parts (31, 32) of the lock (3) pass from a relative unlocked position to a relative locked position, and disengages from the cam (310) when the first and second parts (31, 32) of the lock (3) pass from a relative locked position to a relative unlocked position.

4. Actuating device according to Claim 3, **characterized in that** the cam (310) offers the finger (321) a first or a second path of travel (T1, T2) depending on whether the first and second parts (31, 32) of the lock are brought towards one another from their relative unlocked position or from their relative locked position, **in that** the first path (T1) ends at a trap (P) holding the finger (321) captive, and **in that** the second path (T2) ends at an opening (O) of the cam (310), allowing the finger (321) to escape therefrom.

5. Actuating device according to Claim 4, **characterized in that** the cam (310) has an asymmetric profile, and **in that** the opening (O) of the cam (310) forms an entrance to the first path (T1) and an exit from the second path (T2).

6. Actuating device according to any one of the preceding claims, **characterized in that** the knob (20) is retracted into the housing (1) for the inactive position of the lever (2).

7. Actuating device according to any one of the preceding claims, **characterized in that** it comprises a guide (5) in which the lever is slidably mounted, and **in that** the guide is itself mounted so that it can move back and forth in the housing (1).

8. Actuating device according to any one of the preceding claims, **characterized in that** it additionally comprises selection touch-keys (11 to 16) mounted in the housing and selectively controlling respective states of the gearbox when the lever (2) is in its inactive position, the gearbox then operating in automatic mode.

9. Method using a device according to any one of Claims 1 to 8 for actuating a motor vehicle gearbox, this gearbox adopting an instantaneous gear ratio selected from an ordered series of different gear ratios, **characterized in that** it comprises a first control operation executed in response to a shifting of the lever which brings the knob into a first of its two transitory end positions (P1, P2) and consisting in shifting the gearbox from its instantaneous gear ratio towards that one of its different gear ratios which follows the instantaneous gear ratio in the ordered series of the different gear ratios, and a second control operation executed in response to a shifting of the lever which brings the knob into a second of its two transitory end positions (P1, P2) and consisting in shifting the gearbox from its instantaneous gear ratio towards that one of its different gear ratios which precedes the instantaneous gear ratio in the ordered series of the different gear ratios.

10. Method using a device according to any one of Claims 1 to 7 for actuating a motor vehicle automatic gearbox, this gearbox adopting an instantaneous state selected from an ordered series of different states, **characterized in that** it comprises a first control operation executed in response to a shifting of the lever which brings the knob into a first of its two transitory end positions (P1, P2) and consisting in shifting the gearbox from its instantaneous state towards that one of its different states which follows the instantaneous state in the ordered series of different states, and a second control operation executed in response to a shifting of the lever which brings the knob into a second of its two transitory end positions (P1, P2) and consisting in shifting the gearbox from its instantaneous state towards that one of its different states which precedes the instantaneous state in the ordered series of different states.
